(19) Europäisches Patentamt
European Patent Office
Office européen des brevets

(11) **EP 1 578 041 B1**

(12) **EUROPEAN PATENT SPECIFICATION**

(45) Date of publication and mention
of the grant of the patent:
**21.11.2007 Bulletin 2007/47**

(51) Int Cl.:
*H04B 10/155* *(2006.01)*    *H04B 10/135* *(2006.01)*
*H04B 10/18* *(2006.01)*

(21) Application number: **05005769.4**

(22) Date of filing: **16.03.2005**

(54) **Optical duo-binary transmission apparatus using polarization modulator**

Optische duobinäre Übertragungseinrichtung unter Verwendung eines Polrisationsmodulators

Dispositif de transmission optique duobinaire utilisant un modulateur de polarisation

(84) Designated Contracting States:
**DE FR GB**

(30) Priority: **16.03.2004 KR 2004017532**

(43) Date of publication of application:
**21.09.2005 Bulletin 2005/38**

(73) Proprietor: **SAMSUNG ELECTRONICS CO., LTD.**
**Suwon-si,**
**Gyeonggi-do (KR)**

(72) Inventors:
• **Kim, Hoon**
**Yeongtong-gu,**
**Suwon-si,**
**Gyeonggi-do (KR)**
• **Kim, Sung-Kee**
**Yeongtong-gu,**
**Suwon-si,**
**Gyeonggi-do (KR)**
• **Lee, Han-Lim**
**Yeongtong-gu,**
**Suwon-si,**
**Gyeonggi-do (KR)**

• **Hwang, Seong-Taek**
**Yeongtong-gu,**
**Suwon-si,**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**US-B1- 6 421 155**

• **SIDDIQUI A S ET AL: "DISPERSION-TOLERANT TRANSMISSION USING A DUOBINARY POLARIZATION-SHIFT KEYING TRANSMISSION SCHEME" IEEE PHOTONICS TECHNOLOGY LETTERS, IEEE INC. NEW YORK, US, vol. 14, no. 2, February 2002 (2002-02), pages 158-160, XP001123175 ISSN: 1041-1135**

## Description

The present invention relates to an optical transmission apparatus according to the generic clause of claims 1 and 7 for an optical communication system and, more particularly, to an optical duo-binary transmission apparatus employing a polarization modulator.

Document D1: Siddiqui A S et al: "Dispersion-Tolerant Transmission using a Duobinary Polarization-Shift Keying Transmission Scheme" IEEE Photonics Technology Letters; IEEE Inc. New York; US; vol. 14, no. 2, February 2002 (2002-02), pages 156 - 160, XP001123175 ISSN: 1041-1135 already shows an optical duobinary transmission apparatus according to the generic clauses of claims 1 and 7 and more particularly also discloses a precoder for coding an input binary data signal, a low-pass filter for converting the coded binary data signal into a three level signal, a light source for generating light, a polarization modulator for modulating a polarization of the light outputted from the light source according to the three level signal, and a polarizer for transmitting only an optical signal having a predetermined direction.

From document US-B1-6 421 155 there is already known an optical data transmitting apparatus and method.

In a duo-binary modulation method, information is represented according to the intensity of an optical signal, and a phase of a signal is reversed at a '0' bit. A duo-binary signal has an optical spectrum width smaller than the optical spectrum width of a conventional on-off keying (OOK) modulation signal. As such, the duo-binary signal is advantageous in narrowing the channel width in a dense wavelength-division multiplexing (DWDM) optical transmission system. Also, the duo-binary signal has a superior tolerance for optical fiber distribution. Thus, the duo-binary signal can be transmitted to a distance farther than that of an OOK signal by two or three times without the need for compensating the optical fiber distribution. Further, the duo-binary signal has no carrier tone component, so that the duo-binary signal is resilient against stimulated Brillouin scattering (SBS).

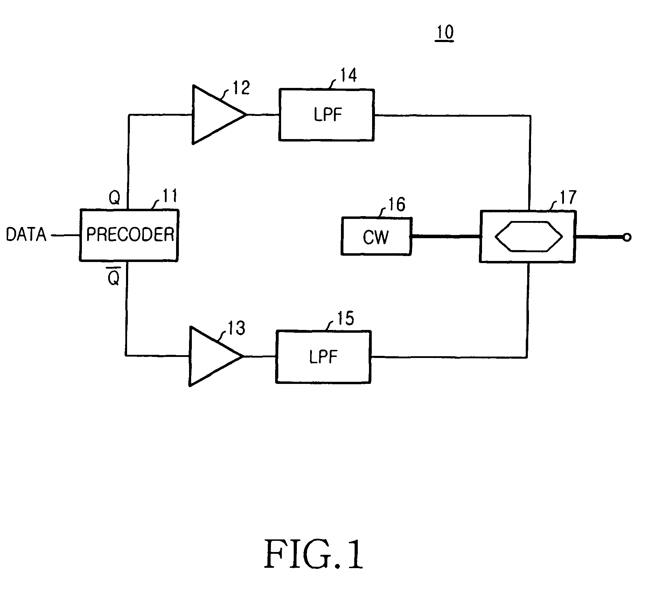

FIG. 1 shows the structure of a conventional optical duo-binary transmitter 10. As shown, the optical duo-binary transmitter 10 includes a precoder 11, modulator drivers 12 and 13, low-pass filters 14 and 15, a continuous wave (CW) light source 16, and a Mach-Zender optical modulator 17.

In operation, binary input data are coded by the precoder 11. The coded binary data are amplified by the modulator drivers 12 and 13, and then applied to the low-pass filters 14 and 15. Herein, when a bandwidth of the low-pass filters 14 and 15 is 3dB, which represents 1/4 of the data rate of binary data, for example, the data rate is 2.5GHz if the data rate of the binary data is 10Gbps. The binary signals, which have passed through the low-pass filters 14 and 15, are converted into three-level signals due to a restriction of the bandwidth. The low-pass filters 14 and 15 are ideally cosine$^2$ filters but may be substituted using Bessel-Thomson filters. Meanwhile, the continuous wave light outputted from the CW light source 11 is converted into an optical duo-binary signal by the Mach-Zender optical modulator 17 that is driven according to the three-level signal.

However, since the conventional optical duo-binary transmitter has a longitudinally symmetric structure, two electric signals applied to the Mach-Zender optical modulator 17 must have identical characteristics. Therefore, two identical modulator drivers and low-pass filters are required. Also, since the conventional optical duo-binary transmitter employs a Mach-Zender optical modulator, the optical duo-binary transmitter is sensitive to a change of a bias voltage. Accordingly, if the bias voltage of the Mach-Zehnder modulator is changed due to temperature change in the optical transmitter, etc., performance of such a system may deteriorate.

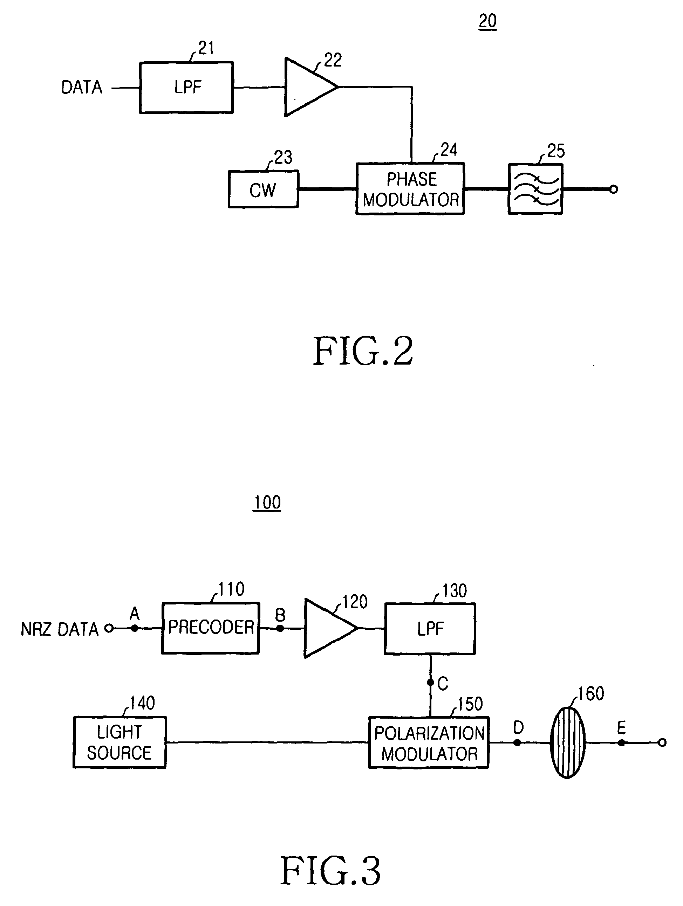

FIG 2. shows a structure of another conventional optical duo-binary transmitter 20. As shown, the optical duo-binary transmitter 20 includes a precoder 21, a modulator driver 22, a continuous wave light source 23, a phase modulator 24, and an optical filter 25.

In operation, binary input data are coded by the precorder 21. Also, the coded binary data are amplified by the modulator driver 22 and provided to a modulator driving signal. Meanwhile, the continuous wave light outputted from the CW light source 23 is phase-modulated by the phase modulator 24 according to the modulator driving signal. The phase-modulated optical signal is converted into an optical duo-binary signal through an optical filter 25 having a bandwidth corresponding to about 70% of the data rate of a binary signal, for example. The filter has a bandwidth of 7GHz if the data rate of the binary signal is 10Gbps.

Although an optical duo-binary signal generated by the optical duo-binary transmitter 20 has low tolerance for an optical fiber distribution as compared with an optical duo-binary signal generated by the optical transmitter shown in FIG. 1, the optical duo-binary transmitter 20 may solve problems relating to the symmetric structure of the optical transmitter shown in FIG 1 and the dependence of the Mach-Zender optical modulator on bias positions. However, the optical duo-binary transmitter 20 requires an optical filter having a narrow passband and a superior distribution characteristic. This type of optical filter is hard to manufacture.

Accordingly, there it is an object of the invention to provide an optical duo-binary transmission apparatus capable of overcoming the problems occurring in the prior art. This object is met by the features of claims 1 and 7.

The present invention relates to an optical duo-binary transmission apparatus using a polarization modulator that is capable of improving the reliability of an optical duo-binary signal without the need for a symmetrical structure of electric elements regardless of the bias position of the polarization modulator.

One aspect of the present invention is to provide an optical duo-binary transmission apparatus using a polarization modulator capable of reducing the fabricating costs of an optical transmission apparatus without using a narrowband optical filter.

Another aspect of the present invention is to provide an optical duo-binary transmission apparatus using a polarization modulator comprising a precoder for coding an inputted binary data signal; a low-pass filter for converting the coded binary data signal into a three-level signal by restricting the bandwidth of the coded binary data signal; a light source for generating light; a polarization modulator for modulating a polarization of the light outputted from the light source according to the three-level signal; and a polarizer for transmitting only an optical signal having a predetermined directionality from among polarization-modulated optical signals.

Preferably, the optical duo-binary transmission apparatus using the polarization modulator further comprises a driving amplifier for amplifying the coded binary data signal.

According to the present invention, the polarizer has a polarization axis aligned in a vertical orientation to a polarization of an optical signal realized when an electrical signal '1' is converted.

According to another aspect of the present invention, an optical transmission apparatus using a polarization modulator includes a precoder for coding an inputted binary data signal; an electrical low-pass filter for converting the coded binary data signal into a three-level signal by restricting the bandwidth of the coded binary data signal; a light source for generating light; a first polarizer having a first polarization axis and for transmitting only an optical signal having the same direction with the first polarization axis of light generated by the light source; a polarization-dependent phase modulator for modulating a phase of an optical signal outputted from the first polarizer according to the three-level signal; and a second polarizer having a second polarization axis vertical to the first polarization axis of the first polarizer and for transmitting only an optical signal having the same direction with the second polarization axis of the phase-modulated optical signal.

The above features and advantages of the present invention will be more apparent from the following detailed description taken in conjunction with the accompanying drawings, in which:

    FIG. 1 shows the structure of a conventional optical duo-binary transmitter;
    FIG. 2 shows the structure of another conventional optical duo-binary transmitter;
    FIG. 3 illustrates the structure of an optical duo-binary transmission apparatus using a polarization modulator according to a first embodiment of the present invention; and,
    FIG. 4 shows graphs illustrating the signal patterns formed at nodes A to E, respectively;
    FIG 5 illustrates the structure of an optical duo-binary transmission apparatus using a polarization modulator according to a second embodiment of the present invention.

Hereinafter, embodiments of the present invention will be described in detail with reference to the accompanying drawings. For the purposes of clarity and simplicity, a detailed description of known functions and configurations incorporated herein will be omitted as it may make the subject matter of the present invention unclear.

FIG. 3 illustrates the structure of an optical duo-binary transmission apparatus 100 using a polarization modulator according to a first embodiment of the present invention.

Referring to FIG. 3, the optical duo-binary transmission apparatus 100 using the polarization modulator according to the present invention includes a precoder 110 for coding an inputted NRZ binary data signal, a driving amplifier 120 for amplifying the coded binary data signal, an electrical low-pass filter 130 for converting the amplified binary data signal into a three-level signal by restricting a bandwidth of the amplified binary data signal, a light source 140 for generating a continuous wave light, a polarization modulator 150 for modulating a polarization of the continuous wave light according to the three-level signal, a polarizer 160 for transmitting only an optical signal having a predetermined direction from the optical signals in which polarization is modulated.

In operation, the predecoder 110 codes the inputted NRZ binary data signal. The predecoder 110 can be realized using 1-bit delayers and exclusive-OR logical elements.

The driving amplifier 120 amplifies the coded binary data signal so that the polarization modulator 150 can operate.

When the low-pass filter 130 has a bandwidth of 3dB representing 1/4 of the data rate of binary data (for example, a data rate of 2.5GHz if the data rate of the binary data is 10Gbps), the binary signal that has passed through the low-pass filter is converted into a three-level signal due to the restriction of the bandwidth. The low-pass filter 130 is a $cosine^2$ filter but may be realized using a Bessel-Thomson filter.

The light source 140 generates a continuous wave light and can be realized using laser diodes.

The polarization modulator 150 modulates a polarization of the continuous wave light generated from the light source 140 according to the three-level signal.

The polarizer 160 is connected to an output terminal of the polarization modulator 150 and transmits only an optical signal having a predetermined direction from the optical signals in which the polarization is modulated.

Hereinafter, an operation of the optical duo-binary transmission apparatus 100 having the above-described structure and using the polarization modulator 150 will be described.

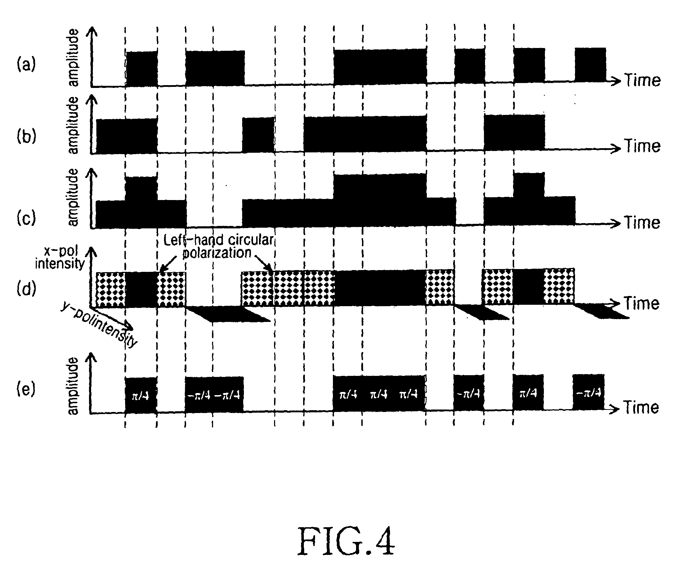

FIG 4 shows graphs illustrating examples of signal patterns formed at nodes A to E, respectively. Referring to FIG 3 and FIG. 4, on the assumption that a data sequence '01011000111010101' is an input signal, after a binary data signal (shown in (a) of FIG. 4) is coded as signals shown in (b) of FIG 4 through the predecoder 110, the binary signal passes through the driving amplifier 120 and is applied to an electrical low-pass filter 130. The binary signal applied to the low-pass filter 130 is converted into a three-level signal as shown in (c) of FIG. 4, and then provided to the polarization modulator 150 as a driving signal. At this time, the three-level signal applied to the polarization modulator 150 has an intensity of peak-to-peak such that the polarization modulator 150 can modulate the polarization at a right angle. The intensity of such a three-level signal is usually represented as $V_\pi$. That is, the intensity of an electrical signal applied to the polarization modulator is $V_\pi$.

Meanwhile, the continuous wave light signal generated from the light source 140 is inputted into the polarization modulator 150 and a polarization thereof is modulated by the polarization modulator 150 according to the three-level signal (refer to (d) of FIG. 4). When the intensity of the three-level signal is represented as '0,' '1,' and '2,' electrical signals '0,' '1,' and '2' are converted into optical signals, wherein "0" represents an optical signal having a y-polarization, "1" represents an optical signal having a left-hand circulator polarization, and "2" represents an optical signal having an x-polarization, respectively, as shown in (d) of FIG. 4. The optical signal polarization-modulated by the polarization modulator 150 is applied to the polarizer 160.

The polarizer 160 has a polarization axis vertically aligned to the left-hand circulator polarization of the optical signal realized by the converted electrical signal '1.' In an example shown in (d) of FIG 4, since the signal '1' has the left-hand circulator polarization, a polarization axis of the polarizer 160 is the right-hand circular polarization. If an optical signal modulated by the polarization modulator 150 has passed through the polarizer 160 having the polarization axis, the optical signal is created as an optical duo-binary signal as shown in (e) of FIG 4. This reason is that an optical signal generated by the means of the electrical signal '1' generates '0' bit because the optical signal does not pass through the polarizer 160, and optical signals generated by the means of the electrical signals '0' and '2' generate '1' while passing through the polarizer 160. Herein, although the electrical signals '0' and '2' identically generate '1' bits, phases of the '1' bits are $\pi/4$ and $-\pi/4$, so that the optical signals of the '1' bits have characteristics similar to a duo-binary signal. The phases of signals of the '1' bits vary depending on the intensity of a signal applied to the polarization modulator 150. The larger intensity of the signal applied to the polarization modulator 150, the closer the phases of the signals of '1' bits approach '0.' In contrast, the smaller the intensity of the signal applied to the polarization modulator 150, the closer the phases of the signals ap-

proach $\pi/2$ and $-\pi/2$. Meanwhile, the phase of the signal of '1' bit θ is represented in the following equation 1.

### Equation 1
$$\theta = \pm\pi(V\pi - V)/2V\pi$$

In the above Equation 1, 'V' represents a peak-to-peak intensity of the three-level applied to the polarization modulator. Therefore, if an intensity of a signal applied to the polarization modulator is small, a signal having the same characteristic as a duo-binary signal can be obtained; that is, a characteristic in which phases of signals of '1' bits are reversed.

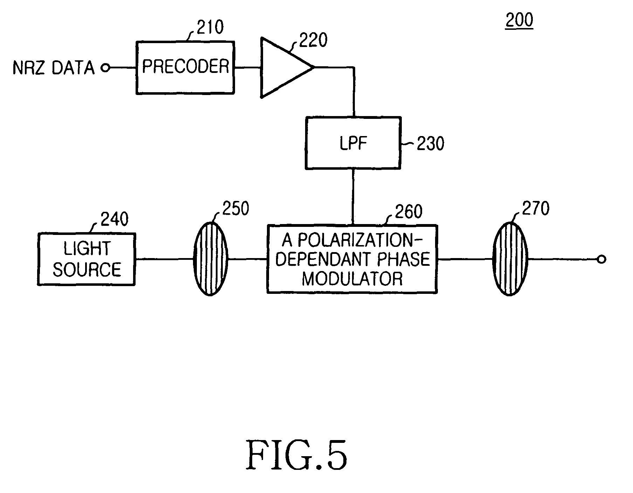

FIG 5 shows a structure of an optical duo-binary transmission apparatus 200 using a polarization modulator according to a second embodiment of the present invention.

As shown, the optical duo-binary transmission apparatus 200 using the polarization modulator according to the present invention includes a precoder 210 for coding an inputted NRZ binary data signal, a driving amplifier 220 for amplifying the coded binary data signal, an electrical low-pass filter 230 for converting the amplified binary data signal into a three-level signal by restricting a bandwidth of the amplified binary data signal, a light source 240 for generating a continuous wave light, a first polarizer 250 for transmitting only an optical signal having a direction identical to that of a polarization axis of the continuous wave light generated by the light source 240, a polarization-dependent phase modulator 260 for modulating a phase of a signal outputted from the first polarizer 250 according to the three-level signal, and a second polarizer 270 having a polarization vertical to the polarization axis of the first polarizer 250 and for transmitting only an optical signal having the same direction as the polarization of the second polarizer 270 of the phase-modulated optical signal.

Note that the second embodiment is realized by replacing the polarization modulator 150 with the polarizer 250 having a polarization axis of 45 degree and the polarization-dependent phase modulator 260. Other components are identical to that shown in FIG. 3. Therefore, a detailed description of the realization of the polarization modulator will be omitted. As described above, two polarizers 250 and 270 having polarization axes vertical to each other (for example, the polarization axes are 45 degree and 135 degree) are aligned at the input and output ends of the polarization-dependent phase modulator 260, thereby making a compact size for the optical duo-binary transmission apparatus.

**Claims**

1. An optical duo-binary transmission apparatus (100) using a polarization modulator, comprising:

a precoder (110) for coding an input binary data signal;
a low-pass filter (130) for converting the coded binary data signal into a three-level signal;
a light source (140) for generating light;
a polarization modulator (150) for modulating a polarization of the light outputted from the light source (140) according to the three-level signal; and,
a polarizer (160) for transmitting only an optical signal having a predetermined direction,

**characterized in that**
the polarizer (160) is placed after the polarisation modulator (150) and the polarizer (160) has a polarization axis aligned vertically to a polarization of an optical signal realized when an electrical signal "1" is converted.

2. The apparatus as claimed in claim 1, further comprising a driving amplifier (120) for amplifying the coded binary data signal.

3. The apparatus as claimed in claim 1, wherein the low-pass filter (130) has a bandwidth of 3-dB corresponding to 1/4 of the data rate of the binary data signal.

4. The apparatus as claimed in claim 1, wherein the three-level signal applied to the polarization modulator (150) is a peak-to-peak signal and is amplified such that a polarization is modulated at a right angle.

5. The apparatus as claimed in claim 4, wherein the intensity of the three-level signal applied to the polarization modulator is $V_\pi$.

6. The apparatus as claimed in claim 1, wherein the apparatus as claimed in claim 1, wherein the light source (140) includes a CW laser outputting a continuous wave light.

7. An optical transmission apparatus (200) using a polarization modulator, comprising:

a precoder (210) for coding an input binary data signal;
an electrical low-pass filter (230) for converting the coded binary data signal into a three-level signal;
a light source (240) for generating light;
a first polarizer (250) having a first polarization axis and for transmitting only an optical signal having the same direction with the first polarization axis of light generated by the light source (240);

**characterized by**

a polarization-dependent phase modulator (260) for modulating a phase of an optical signal outputted from the first polarizer (250) according to the three-level signal; and,
a second polarizer (270) having a second polarization axis vertical to the first polarization axis of the first polarizer (250) and for transmitting only an optical signal having the same direction with the second polarization axis of the phase-modulated optical signal.

8. The apparatus as claimed in claim 7, further comprising a driving amplifier (220) for amplifying the coded binary data signal.

9. The apparatus as claimed in claim 7, wherein the electrical low-pass filter (230) has a bandwidth of 3-dB corresponding to 1/4 of the data rate of the binary data signal.

10. The apparatus as claimed in claim 7, wherein the first polarizer (250) has a 45° polarization axis.

11. The apparatus as claimed in claim 7, wherein the light source (240) includes a CW laser outputting a continuous wave light.

**Patentansprüche**

1. Optische duobinäre Übertragungsvorrichtung (100), die einen Polarisationsmodulator verwendet, wobei sie umfasst:

einen Vorcodierer (110) zum Codieren eines Eingangs-Binärdatensignals;
ein Tiefpassfilter (130) zum Umwandeln des codierten Binär-Datensignals in ein Dreistufensignal;
eine Lichtquelle (140) zum Erzeugen von Licht;
einen Polarisationsmodulator (150) zum Modulieren einer Polarisation des von der Lichtquelle (140) ausgegebenen Lichtes gemäß dem Dreistufensignal; und
einen Polarisierer (160), der nur ein Signal mit einer vorgegebenen Richtung durchlässt,

**dadurch gekennzeichnet, dass**
der Polarisierer (160) hinter dem Polarisationsmodulator (150) angeordnet ist und der Polarisierer (160) eine Polarisationsachse hat, die vertikal zu einer Polarisation eines optischen Signals ausgerichtet ist, das realisiert wird, wenn ein elektrisches Signal "1" umgewandelt wird.

2. Vorrichtung nach Anspruch 1, die des Weiteren einen Treiberverstärker (120) zum Verstärken des codierten Binärdatensignals umfasst.

**3.** Vorrichtung nach Anspruch 1, wobei das Tiefpassfilter (130) eine Bandbreite von 3-dB hat, die 1/4 der Datenrate des Binärdatensignals entspricht.

**4.** Vorrichtung nach Anspruch 1, wobei das Dreistufensignal, das an den Polarisationsmodulator (350) angelegt wird, ein Spitzensignal ist und so verstärkt wird, dass eine Polarisation in einem rechten Winkel moduliert wird.

**5.** Vorrichtung nach Anspruch 4, wobei die Intensität des an den Polarisationsmodulator angelegten Dreistufensignals $V_\pi$ ist.

**6.** Vorrichtung nach Anspruch 1, wobei die Lichtquelle (140) einen CW-Laser enthält, ein Dauerstrich-Licht ausgibt.

**7.** Optische Übertragungsvorrichtung (300), die einen Polarisationsmodulator verwendet, wobei sie umfasst:

einen Vorcodierer (210) zum Codieren eines Eingangs-Binärdatensignals;
ein elektrisches Tiefpassfilter (230) zum Umwandeln des codierten Binärdatensignals in ein Dreistufensignal;
eine Lichtquelle (240) zum Erzeugen von Licht;
einen ersten Polarisierer (250) mit einer ersten Polarisationsachse, der nur ein optisches Signal durchlässt, das die gleiche Richtung hat wie die erste Polarisationsachse von durch die Lichtquelle (240) erzeugtem Licht;
**gekennzeichnet durch**
einen polarisationsabhängigen Phasenmodulator (260) zum Modulieren einer Phase eines von dem ersten Polarisierer (250) ausgegebenen optischen Signals gemäß dem Dreistufensignal; und
einen zweiten Polarisierer (270) mit einer zweiten Polarisationsachse vertikal zu der ersten Polarisationsachse des ersten Polarisierers (250), der nur ein optisches Signal durchlässt, das die gleiche Richtung hat wie die zweite Polarisationsachse des phasenmodulierten optischen Signals.

**8.** Vorrichtung nach Anspruch 7, die des Weiteren einen Treiberverstärker (220) zum Verstärken des codierten Binärdatensignals umfasst.

**9.** Vorrichtung nach Anspruch 7, wobei das elektrische Tiefpassfilter (230) eine Bandbreite von 3-dB hat, die 1/4 der Datenrate des Binärdatensignals entspricht.

**10.** Vorrichtung nach Anspruch 7, wobei der erste Polarisierer (250) eine 45°-Polarisationsachse hat.

**11.** Vorrichtung nach Anspruch 7, wobei die Lichtquelle (240) einen CW-Laser enthält, der ein Dauerstrich-Licht ausgibt.

**Revendications**

**1.** Appareil de transmission optique duobinaire (100) utilisant un modulateur de polarisation comprenant :

un précodeur (110) pour coder un signal de donnée binaire d'entrée ;
un filtre passe-bas (130) pour convertir le signal de donnée binaire codé en un signal à trois niveaux;
une source de lumière (140) pour générer de la lumière ;
un modulateur de polarisation (150) pour moduler une polarisation de la lumière délivrée par la source de lumière (140) conformément au signal à trois niveaux ; et
un polariseur (160) pour transmettre uniquement un signal optique ayant une direction prédéterminée,

**caractérisé en ce que**
le polariseur (160) est placé après le modulateur de polarisation (150) et le polariseur (160) a un axe de polarisation aligné verticalement à une polarisation d'un signal optique réalisée lorsqu'un signal électrique "1" est converti.

**2.** Appareil selon la revendication 1, comprenant de plus un amplificateur d'attaque (120) pour amplifier le signal de donnée binaire codé.

**3.** Appareil selon la revendication 1, dans lequel le filtre passe-bas (130) a une bande passante de 3 dB correspondant à 1/4 du débit de données du signal de donnée binaire.

**4.** Appareil selon la revendication 1, dans lequel le signal à trois niveaux appliqué au modulateur de polarisation (150) est un signal crête à crête et est amplifié de sorte qu'une polarisation est modulée à un angle droit.

**5.** Appareil selon la revendication 4, dans lequel l'intensité du signal à trois niveaux appliqué au modulateur de polarisation est $V_\pi$.

**6.** Appareil selon la revendication 1, dans lequel la source de lumière (140) comprend un laser continu délivrant une lumière en onde continue.

**7.** Appareil de transmission optique (200) utilisant un modulateur de polarisation, comprenant :

un précodeur (210) pour coder un signal de donnée binaire d'entrée ;
un filtre passe-bas électrique (230) pour convertir le signal de donnée binaire codé en un signal à trois niveaux ;
une source de lumière (240) pour générer de la lumière ;
un premier polariseur (250) ayant un premier axe de polarisation et transmettant uniquement un signal optique ayant la même direction que le premier axe de polarisation de la lumière générée par la source de lumière (240);

**caractérisé par** :

un modulateur de phase dépendant de la polarisation (260) pour moduler une phase d'un signal optique délivré par le premier polariseur (250) conformément au signal à trois niveaux ; et
un deuxième polariseur (270) ayant un deuxième axe de polarisation vertical au premier axe de polarisation du premier polariseur (250) et transmettant uniquement un signal optique ayant la même direction que le deuxième axe de polarisation du signal optique modulé en phase.

8. Appareil selon la revendication 7, comprenant de plus un amplificateur d'attaque (220) pour amplifier le signal de donnée binaire codé.

9. Appareil selon la revendication 7, dans lequel le filtre passe-bas électrique (230) a une bande passante de 3 dB correspondant à 1/4 du débit de données du signal de donnée binaire.

10. Appareil selon la revendication 7, dans lequel le premier polariseur (250) a un axe de polarisation de 45°.

11. Appareil selon la revendication 7, dans lequel la source de lumière (240) comprend un laser continu délivrant une lumière en onde continue.

10

FIG.1

<u>20</u>

21

DATA —— | LPF | 22

23

| CW | —— | PHASE MODULATOR | 24 25

# FIG.2

<u>100</u>

110 120 130

NRZ DATA o—•—A | PRECODER | •—B —▷ | LPF |

•C

140 150 160

| LIGHT SOURCE | —— | POLARIZATION MODULATOR | •—D •—E —o

# FIG.3

FIG.4

210

220

NRZ DATA ○──── PRECODER ─────▷────┐

200

LPF ──230

240                    250                              260                    270

LIGHT
SOURCE ────────⬭──── A POLARIZATION-
                      DEPENDANT PHASE
                      MODULATOR ────⬭────○

FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• US 6421155 B1

### Non-patent literature cited in the description

• **SIDDIQUI A S et al.** Dispersion-Tolerant Transmission using a Duobinary Polarization-Shift Keying Transmission Scheme. *IEEE Photonics Technology Letters,* February 2002, vol. 14 (2), 156-160